# EUROPEAN PATENT SPECIFICATION

(11) **EP 3 097 765 B1**
(45) Date of publication and mention of the grant of the patent: **09.05.2018**
(21) Application number: 16171220.3
(22) Date of filing: 25.05.2016
(51) Int. Cl.: A01D 34/416, A01D 34/90, A01D 69/02

(54) **BATTERY-POWERED STRING TRIMMER**
BATTERIEBETRIEBENER FADENSCHNEIDER
TONDEUSE À FIL ALIMENTÉ PAR BATTERIE

(30) Priority: 28.05.2015 US 201514724526
(43) Date of publication of application: 30.11.2016
(73) Proprietor: Stanley Black & Decker, Inc., New Britain, CT 06053 (US)
(72) Inventor: POOLE, Brian E., Lutherville, MD 21093 (US); SCHOCH, Robert, Baltimore, Maryland 21230 (US); PALERMO, John, Baltimore, MD 21211 (US); MILLER, Mark D., Fawn Grove, PA 17321 (US); CANNALIATO, Michael, deceased (US)
(74) Representative: SBD IPAdmin

(56) References cited:
- WO-A2-2011/024479
- US-A- 5 181 369
- US-A- 5 265 341
- US-A1- 2014 352 160

## Description

The invention relates to a battery-powered string trimmer. More particularly, the invention relates to a battery-powered string trimmer configured with a center of gravity provided between dual handle members to facilitate operator use and a more ergonomic handle assembly.

Conventional string trimmers are generally used for horizontal trimming and vertical edging of lawn. Typically, string trimmers include dual handle members, a motor, a power source, an elongated shaft and a lower cutting head, from which the string cutting element extends and rotates to cut grass, weeds, and other vegetation. String trimmers generally may be powered by combustible fuel engines or electric motors and a battery.

Most conventional battery-powered string trimmers (such as WO 2011/024479) have the motor provided in a head assembly at a lower end of a shaft, and are actuated by a trigger, provided in the handle assembly. Most handle assemblies include a front handle member and a rear handle member. Further, most battery-powered string trimmers provide that the actuator, battery and the switch member, that control the power flowing from the battery to the cutting head, are cooperatively housed within the handle assembly. One disadvantage of this configuration is that the center of gravity for the entire unit is usually located in front of, or proximate to the front handle member.

As a consequence of providing the center of gravity in front of the front handle member, the operator is required to exert additional force to the rear handle in order to balance the head assembly of the string trimmer. As a result of applying a force to the rear handle member, the operator is then also required to exert an additional force on the front handle member, in order to counterbalance the force applied at the rear handle. Accordingly, providing the center of gravity in front of the front handle member has its disadvantages.

Similarly, for battery-powered string trimmers that provide a center of gravity generally proximate to the rear of the unit and behind the rear handle member, a user must exert force on the front handle member, in order to balance the unit. This additional force on the front handle requires the operator to exert an additional force to the back of the handle member, thus adding to the overall force exerted by the operator to operate the unit. Energy exertion by the operator, over an extended period of time, can create physical problems to the operator, and/or limit the operator's string trimmer usage. US 5,265,341 discloses a battery powered line trimmer having a forward and rearward handle attached thereto, and further having an arm cradle atop the battery casing allowing the operator to rest his forearm upon it during operation. The arm cradle allows the operator to maintain control of and manoeuvre the line trimmer by using the rear handle and arm cradle should the need arise for him to release his grip of the forward handle while cutting vegetation.

In light of the present need for a well balanced string trimmer, a brief summary of various exemplary embodiments is presented. Some simplifications and omissions may be made in the following summary, which is intended to highlight and introduce some aspects of the various exemplary embodiments, but not to limit the scope of the invention. Detailed descriptions of a preferred exemplary embodiment adequate to allow those of ordinary skill in the art to make and use the inventive concepts will follow in later sections.

According to a first aspect of the invention, there is provided a battery-powered string trimmer assembly, comprising: an elongated support shaft assembly having a proximal end and a distal end; a head assembly including a motor, connected to the distal end of the support shaft assembly; a handle assembly operatively connected to the support shaft assembly, the handle assembly including a front handle member and a main; handle member including a housing, wherein the front handle member is provided in front of the center of gravity on the shaft and the main handle member is provided rearward of the center of gravity on the shaft; and, a battery housing assembly connected to the proximal end of the support shaft assembly and in spaced relation from the main handle member, the battery housing assembly including a housing configured to receive a battery.

Preferably the housing of the main handle member includes an actuator configured to control operation of the motor of the head assembly. Furthermore, the string trimmer assembly may also include a switch member operatively connected to the actuator and to the motor to control operation of the motor, wherein the battery housing assembly encloses the switch member therein.
In one arrangement, the string trimmer assembly may be furnished with a linkage assembly extending between the handle assembly and the battery housing assembly, the linkage assembly possibly including a rod member operatively connecting the actuator provided in the handle assembly and the variable switch member provided in the battery housing assembly.

Advantageously the actuator may include a first trigger member operatively connected to the rod member, wherein when a user depresses the first trigger member, a portion of the first trigger member rotates pulling the rod member, thereby activating the switch member located in the battery housing. The center of gravity of the battery-powered string trimmer may be located approximately centered between the front handle member and a first trigger member.

In one embodiment, the actuator assembly further includes a second trigger member. Furthermore, the support shaft may be a unitary member that passes through the main handle member.

In a second aspect of the invention there is provided a battery-powered string trimmer assembly, comprising: a unitary support shaft assembly having a proximal end and a distal end; a head assembly including a motor, connected to the distal end of the support shaft assembly; a handle assembly operatively connected to the support shaft assembly, the handle assembly including a front handle member and a main handle member including a housing; a battery housing assembly connected to the proximal end of the support shaft assembly and in spaced relation from the main handle member of the handle assembly on the support shaft assembly; and, a switch member provided in the battery housing assembly to control the flow of power from the battery to the motor in the head assembly.

The center of gravity may be provided between the front handle member and main handle member. Furthermore, the string trimmer assembly may comprise a linkage assembly which may extend between the handle assembly and the battery housing assembly to control the switch member, the linkage assembly may include a rod member operatively connected to an actuator provided in the handle assembly and the switch member provided in the battery housing assembly. In a preferred arrangement, a cover member may be positioned between the battery housing assembly and main handle member to partially enclose the rod member. The support shaft may be a unitary member that passes through the main handle member. The battery housing assembly may permit multiple battery unit sizes to be interchanged therein.

In order to better understand various exemplary embodiments, reference is made to the accompanying drawings, wherein:
FIG. 1 is an environmental perspective view of a battery-powered string trimmer assembly;
FIG. 2 is a side view of the battery-powered string trimmer assembly of FIG. 1, orientated on a coordinate system for the purpose of illustrating the center of gravity of the battery-powered string trimmer assembly and components;
FIG. 3 is a detailed perspective view of a handle assembly and battery housing assembly of the battery-powered string trimmer assembly of FIG. 1, illustrating a front handle member and main handle member;
FIG. 4 is a sectional side view of the handle assembly and battery assembly of the battery-powered string trimmer assembly of FIG. 1, in an off position;
FIG. 5 is a sectional side view of the handle assembly and battery assembly of the battery-powered string trimmer assembly of FIG.1, in an on position;
FIG. 6 is a sectional side view of the handle assembly of the battery-powered string trimmer, illustrating a triggering mechanism in an off position;
FIG. 7 is a sectional side view of the handle assembly of the battery-powered string trimmer, illustrating the triggering mechanism, in an on position; and
FIG. 8 is a cross-sectional side view of the head assembly of FIG. 1.

To facilitate understanding, identical reference numerals have been used to designate elements having substantially the same or similar structure and/or substantially the same or similar function.

As previously discussed, most battery-powered string trimmers are front heavy and provide the center of the gravity of the unit in front of a front handle member causing the user to exert additional energy to balance the string trimmer. To reduce the energy required to operate, it is therefore desirable to provide a battery-powered string trimmer configured such that the center-of-gravity is located generally between the first front handle member and the second rear handle member. As such, the operator can balance the mass of the unit between his/her arms, permitting the user to operate the unit comfortably for extended periods of time.

It is further desirable to provide a string trimmer with a battery assembly in spaced configuration from the handle assembly to further facilitate the balancing of the battery mass and the motor between the front handle member and second handle member.

It is further desirable to provide a linkage assembly extending between the rear handle member and battery housing, to permit positioning of variable switch in the battery housing, and thus providing the operator with an enhanced operating experience.

The foregoing advantages of the invention are illustrative of those that can be achieved by the various exemplary embodiments and are not intended to be exhaustive or limiting of the possible advantages which can be realized. Thus, these and other advantages of the various exemplary embodiments will be apparent from the description herein or can be learned from practicing the various exemplary embodiments, both as embodied herein or as modified in view of any variation that may be apparent to those skilled in the art. Accordingly, the invention resides in the novel methods, arrangements, combinations, and improvements herein shown and described in various exemplary embodiments.

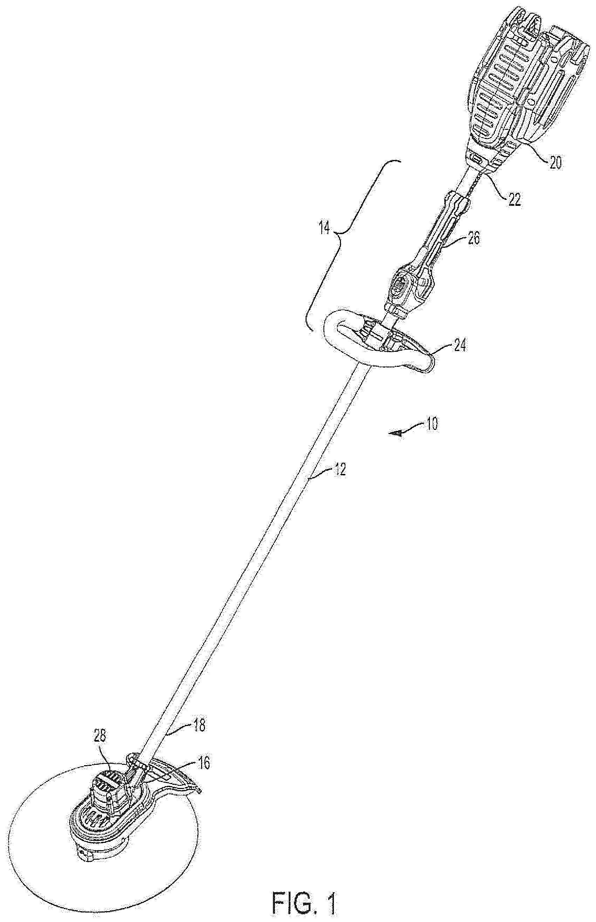

Referring now to the drawings, wherein the illustrations are for purposes of describing one or more embodiments and not for the purposes of limiting the same, FIG. 1 illustrates an embodiment of the battery-powered string trimmer 10 including an elongated support shaft 12, a head assembly 16 including a motor 28 provided generally at a distal end 18 of the support shaft 12, and a battery housing assembly 20 for supporting a battery 36 therein, and provided generally at a proximal end 22 or rearward of the support shaft 12.

The battery-powered string trimmer 10 further includes a handle assembly 14, provided along the support shaft 12, intermediate to the head assembly 16 and battery housing assembly 20. The handle assembly 14 and the battery housing assembly 20 are in spaced relationship to each other. As shown, the handle assembly 14 generally includes a front or auxiliary handle member 24 for receiving a grip from one of the operator's hands, and a rear or main handle member 26, for receiving a grip from the operator's other hand.

As previously mentioned, the battery-powered string trimmer 10 is configured such that the center of gravity of the unit is provided between the front handle member 24 and the rear handle member 26 during operation, thus enhancing the user's operating experience.

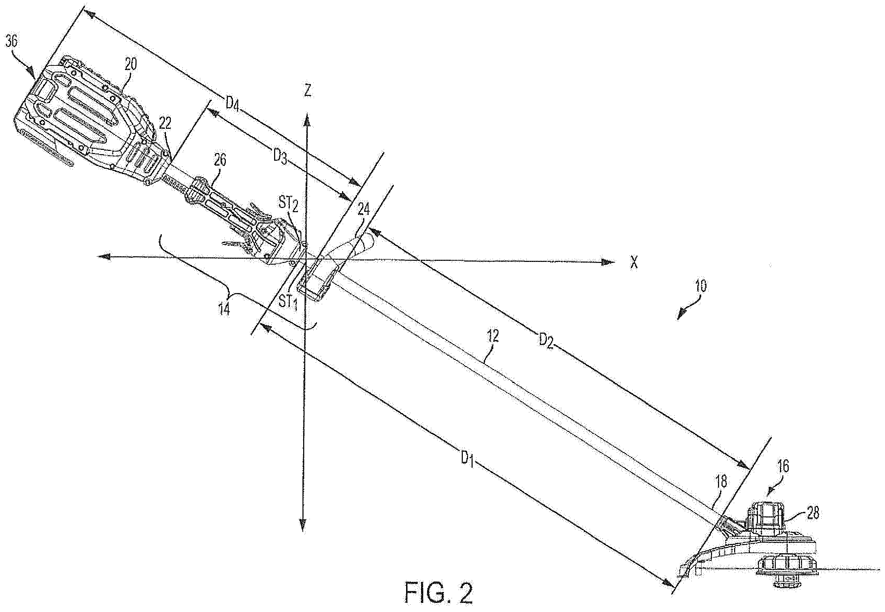

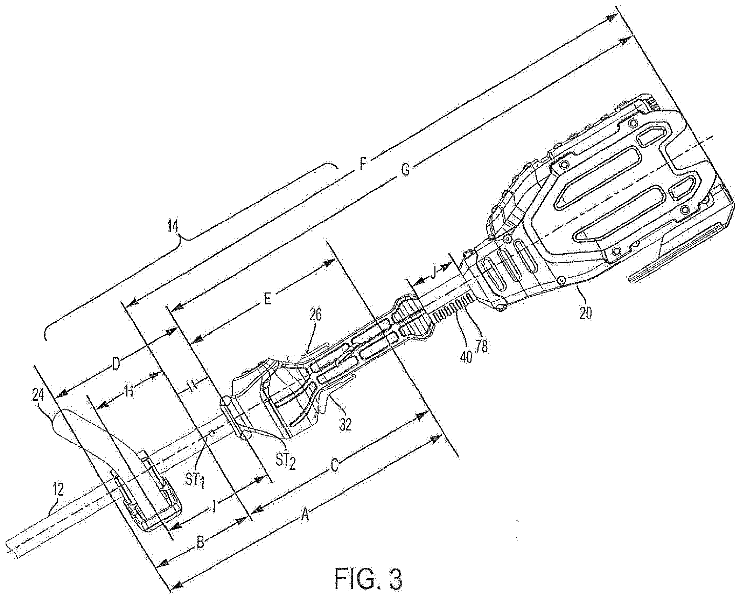

As illustrated in FIGS. 2 and 3, the center of gravity (CoG) of the battery-powered string trimmer 10 is provided generally between the front handle member 24 and main handle member 26. As represented by the coordinate system, a vertical axis (z) is generally normal to the ground through the center of gravity of the battery-powered string trimmer 10 and a horizontal axis (x) is generally parallel to the ground through the center of gravity of the battery-powered string trimmer 10.

The front handle member 24 and main handle member 26, each includes a grip, and are configured for receivable engagement by one of the operator's hands. As shown, the front handle member 24 and main handle member 26 are spaced apart. As shown, in this embodiment, the front handle member 24 and main handle member 26 are separated by approximately 382.6 millimeters, indicated at A.

As such, the center of gravity of the battery-powered string trimmer 10 is provided between the front handle member 24 and main handle member 26 providing a mechanical advantage to the user during operation. In the operating position, the front handle member 24 is located generally below the center of gravity of the battery-powered string trimmer member 10, and the main handle member 26 is located above the center of gravity of the battery-powered string trimmer 10 in the operating position.

The battery-powered string trimmer 10 provides for several battery capacity options, which generally each have different masses. As shown, the location of the center of gravity of the overall battery-powered string trimmer 10 for a first embodiment is represented at ST1 generally between front handle member 24 and main handle member 26. As shown ST1 is generally central to the front handle member 24 and rear handle member 26, permitting the operator to balance the battery-powered string trimmer 10 between both arms generally equally. ST2 represents the center of gravity of a second embodiment of the battery unit that is slightly heavier than the first. It should be understood that although different battery capacities (which affect the weight) could be used, the battery weight should be selected so as to maintain the CoG of the string trimmer to be between the front handle member 24 and main handle member 26. More specifically, the center of gravity may be located approximately centered between the front handle member 24 and a trigger member 32. The center of gravity of the battery-powered string trimmer 10 was calculated at an approximate operating position of 32 degrees relative to the (x) axis.

In the string trimmer according to the first embodiment, the center of gravity of the battery-powered string trimmer 10 shown at ST1 is provided approximately 131 millimeters from the center of the grip from the frontal handle member 24, indicated at B and approximately 245 millimeters from the center of the grip portion from the rear handle member 26, indicated at C. Accordingly the entire combined distance is approximately 376 millimeters, which is indicated at A. The distance between the front handle member 24 connection to the support shaft 14 and the center of gravity of the string trimmer ST1 is approximately 87 millimeters, which is indicated at H. For a string trimmer according to the second embodiment, the center of gravity of the string trimmer 10 at ST2 is provided approximately 202 millimeters from the front handle, indicated at D, and 174 millimeters from the main handle member, indicated at E. The distance between the front handle member 24 connection to the support shaft 14 and the center of gravity ST2 is approximately 157 millimeters, which is indicated at I.

By positioning the front handle member 24 and main handle member 26 at a selected distance, and configuring the center of gravity between the front handle member 24 and main handle member 26, a mechanical advantage is achieved by balancing the mass of the unit between both handle members 24, 26. Balancing the battery-powered string trimmer 10 mass between both of the operator's arms, provide the operator with enhanced control and balance, during operation.

As shown in FIG. 2, the main handle member 26 is provided on the support shaft 12, in front of the battery housing assembly 20 and rearward of the center of gravity of the battery-powered string trimmer 10 in the operating position. As such, the main handle member 26 is located approximately 1032.8 millimeters from the head assembly 16 of the battery-powered string trimmer 10, as shown at D1. The front handle member 24 is provided generally 844.6 millimeters from the front end of the support shaft 12 and head assembly 16, as shown at D2. The front handle member 24 is approximately 463.6 millimeters from the rear end of the support shaft 12, as shown at D3 and approximately 787.4 millimeters from the end of the entire battery-powered string trimmer 10, as shown at D4.

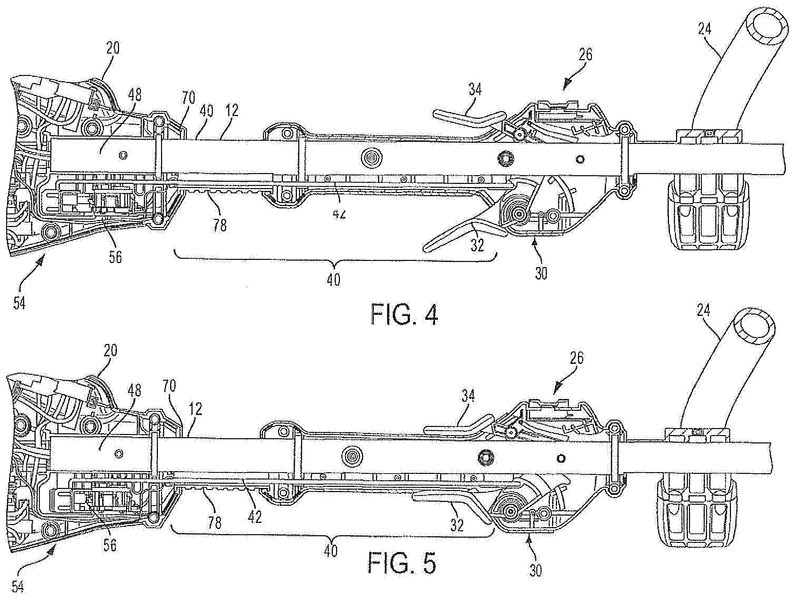

The battery housing assembly 20, (further described in detail in U.S. Patent Application No. 14/713,411, entitled, "String Trimmer Battery Housing Assembly", incorporated herein by reference), is configured to receive the battery therein. In general, the battery has a relatively heavy mass, which acts as a counterweight in balancing the head assembly 16 of the battery-powered string trimmer 10. As shown in Figs. 4 and 5, the battery housing 20 is connected to an end portion 48 of support shaft 12.

As shown the battery housing assembly 20 is provided in spaced relation from the handle assembly 14. As such, the end portion 48 has a length of approximately 57.15 millimeters between the front end 70 of the battery housing assembly 20 and the rear of the rear handle member 26, as indicated at J. Accordingly, the battery housing assembly 20 is spaced from the rear handle member 26. As such, in the first embodiment of the string trimmer, the center of gravity of the battery-powered string trimmer 10 is approximately 697 millimeters from the rear of the battery housing assembly 20, indicated at F. In the second embodiment of the string trimmer, the rear of the battery housing assembly 20 is approximately 654 millimeters from the center of gravity of the battery-powered string trimmer 10, indicated at G.

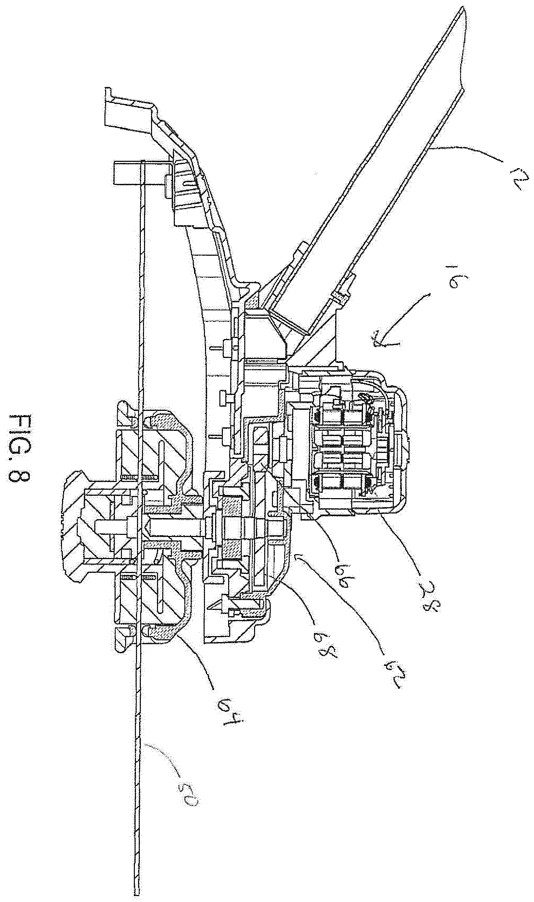

As shown in FIG. 8, the head assembly 16 is provided generally at the end of the support shaft 12, and provides a counter balance to the battery housing assembly 20, such that the center of gravity ST1 is located between the front handle member 24 and the main handle member 26 (as previously shown). The motor 28 of the head assembly 16 includes a gear reduction transmission system 62. The gear reduction transmission system 62, which includes a series of gears 66 and 68 that provide speed and torque conversions to between the motor 28 and connected spool 64.

In addition to driving the spool 64, the gear reduction transmission system 62 of the head assembly 16 and motor 28 provides an increased weight to the head assembly 16. When the user strikes the head assembly 16 or string 50 against an object, such as a wall or pole, for example, the weight of the transmission system 62 provides a beneficial counterweight sufficient to withstand the impact.

As shown in FIGS. 4 and 5, the main handle member 26, in cooperation with a switch member 56, which is provided in the battery housing assembly 24, controls actuation of the string trimmer motor 28, operatively connected thereto. The main handle member 26 includes an actuator assembly 30, having a first trigger member 32 and a second trigger member 34, which actuates power delivered from the battery to the motor 28 located in the head assembly 16.

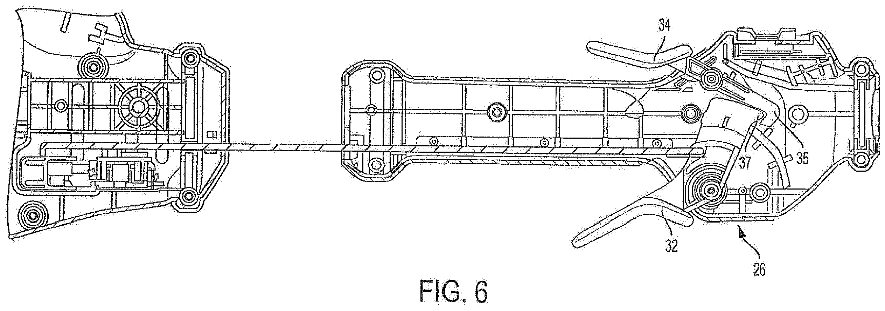

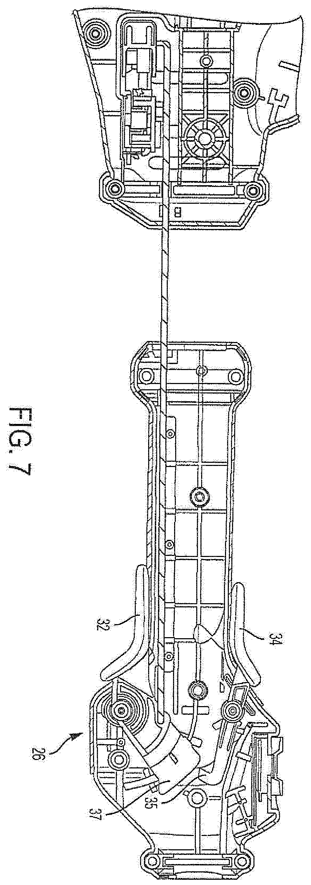

The second trigger member 34 acts as a lockout which allows the first trigger member 32 to activate the battery-powered string trimmer 10 only when it is actuated. As shown in FIG. 6, in an off position, the second trigger member 34 includes a lockout feature 35 which engages an abutment portion 37 of the first trigger member 32, preventing the first trigger member 32 from moving. As shown in FIG. 7, by depressing the second trigger member 34, the lockout feature 35 rotates away from the abutment portion 37 of the first trigger member 32, allowing the first trigger member 32 to be activated by a user.

By positioning the switch member 56 in the battery housing assembly 20, the main handle 26 is able to achieve a slim profile, helping to maintain an ergonomic handle design, as well as other benefits further detailed below. The battery-powered string trimmer 10 further includes a linkage assembly 40, which operatively connects the actuator assembly 30 to the switch member 56 and related modules. The linkage assembly 40 includes a rod member 42. The rod member 42 has an elongated shape, and is operatively connected to the first trigger member 32 located inside of the main handle member 26. The first trigger member 32 is rotatable such that movement of the trigger member 32 causes longitudinal movement of the rod member 42. As shown, the trigger 32 is configured to pivot and pull the rod 42 along the support shaft 12. As such, the linkage assembly 40 and connected rod member 42 ride in the plastic cover 78, which is connected to the support shaft 12 to protect the rod member 42.

As shown the battery housing assembly 20 has a lower portion 54 which encloses the switch member 56 therein. The rod member 42, extending from the main handle member 26, is operatively connected to the switch member 56. Accordingly, actuation of the trigger 26 activates the switch member 56 into an on and off position, providing variable power to the motor 28. The switch member 56 may be a variable speed switch, permitting the user to selectively control the speed of the motor 28.

One inherent benefit of providing the switch member 56 in the battery housing assembly 20, instead of the main handle member 26, is that the size of the overall main handle member 26 is reduced by not having to provide space for the switch member 56 and related electrical components therein.

Similarly, the relocation of the switch member 56 allows passage of the unitary support shaft 12 through the limited interior space of the main handle member 26. In contrast, if the switch member 56 were provided in the main handle member 26, there would not be enough space for the support shaft 12 to pass without unduly increasing the size of the main handle member 26. Alternatively, the support shaft could be split into two pieces to accommodate the switch member 56, with a first shaft member provided at one end of the handle assembly 24 and a second shaft member continuing on the other end of the main handle assembly 26. But this two shaft configuration would not be as durable as the unitary shaft 12 employed in this invention. In sum, by locating the switch member 56 in the battery housing assembly, the unitary support shaft 12 provides an enhanced structural strength to the overall battery-powered string trimmer 10 and slimmer profile.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be affected while remaining within the scope of the invention. Accordingly, the foregoing disclosure, description, and figures are for illustrative purposes only and do not in any way limit the invention, which is defined only by the claims.

## Claims

1. A battery-powered string trimmer assembly (10), comprising:
an elongated support shaft assembly (12) having a proximal end and a distal end;
a head assembly (16) including a motor (28), connected to the distal end of the support shaft assembly;
a handle assembly (14) operatively connected to the support shaft assembly, the handle assembly including a front handle member (24) and a main handle member (26) including a housing, wherein the front handle member is provided in front of the center of gravity on the shaft and the main handle member is provided rearward of the center of gravity on the shaft; and,
a battery housing assembly (20) connected to the proximal end of the support shaft assembly and including a housing configured to receive a battery, **characterised in that** the battery housing assembly is in spaced relation from the main handle member.

2. The battery-powered string trimmer assembly of claim 1, wherein the housing of the main handle member (26) includes an actuator (30) configured to control operation of the motor (28) of the head assembly (16).

3. The battery-powered string trimmer assembly of claim 2, further including a switch member (56) operatively connected to the actuator (30) and to the motor (28) to control operation of the motor, wherein the battery housing assembly (20) encloses the switch member therein.

4. The battery-powered string trimmer assembly of claim 3, further including a linkage assembly (40) extending between the handle assembly (14) and the battery housing assembly (20), the linkage assembly including a rod member (42) operatively connecting the actuator (30) provided in the handle assembly and the variable switch member (56) provided in the battery housing assembly.

5. The battery-powered string trimmer assembly of claim 4, wherein the actuator (30) includes a first trigger member (32) operatively connected to the rod member (42), wherein when a user depresses the first trigger member, a portion of the first trigger member rotates pulling the rod member, thereby activating the switch member (56) located in the battery housing (20).

6. The battery-powered string trimmer as claimed in any preceding claim, wherein the center of gravity of the battery-powered string trimmer is located approximately centered between the front handle member (24) and a first trigger member (32).

7. The battery-powered string trimmer of claim 5, wherein the actuator (30) assembly further includes a second trigger member (34).

8. The battery powered string trimmer as claimed in any preceding claim, wherein the support shaft (12) is a unitary member that passes through the main handle member (26).

9. The battery-powered string trimmer assembly as claimed in claim 1, wherein:
the support shaft assembly (12) is unitary; and
the battery powered string trimmer assembly further comprises a switch member (56) provided in the battery housing assembly (20) to control the flow of power from the battery to the motor (28) in the head assembly (16).

10. The battery-powered string trimmer assembly of claim 9, further comprising a linkage assembly (40) which extends between the handle assembly (14) and the battery housing assembly (20) to control the switch member (56), the linkage assembly includes a rod member (42) operatively connected to an actuator (30) provided in the handle assembly and the switch member provided in the battery housing assembly.

11. The battery-powered string trimmer assembly of claim 10, wherein a cover member (78) positioned between the battery housing assembly (20) and main handle member (26) partially encloses the rod member (42).

12. The battery-powered string trimmer of claims 9 to 11, wherein the support shaft (12) is a unitary member that passes through the main handle member (26).

13. The battery-powered string trimmer of claims 9 to 12, wherein the battery housing assembly (20) permits multiple battery unit sizes to be interchanged therein.

## Patentansprüche

1. Batteriebetriebene Fadentrimmer-Anordnung (10), umfassend:
eine langgestreckte Trägerwellen-Anordnung (12), die ein proximales Ende und ein distales Ende aufweist;
eine einen Motor (28) einschließende Kopf-Anordnung (16), die mit dem distalen Ende der Trägerwellen-Anordnung verbunden ist;
eine Handgriff-Anordnung (14), die mit der Trägerwellen-Anordnung funktionsfähig verbunden ist, wobei die Handgriff-Anordnung ein Front-Handgriffelement (24) und ein Haupt-Handgriffelement (26) einschließt, einschließlich ein Gehäuse, wobei das Front-Handgriffelement vor dem Schwerpunkt auf der Welle vorgesehen ist und das Haupt-Handgriffelement hinter dem Schwerpunkt auf der Welle vorgesehen ist; und
eine Batteriegehäuse-Anordnung (20), die mit dem proximalen Ende der Trägerwellen-Anordnung verbunden ist und ein Gehäuse einschließt, das zum Aufnehmen einer Batterie ausgelegt ist, **dadurch gekennzeichnet, dass** sich die Batteriegehäuse-Anordnung von dem Haupt-Handgriffelement in einer beabstandeten Beziehung befindet.

2. Batteriebetriebene Fadentrimmer-Anordnung nach Anspruch 1, wobei das Gehäuse des Haupt-Handgriffelements (26) eine Betätigungsvorrichtung (30) einschließt, die ausgelegt ist, um den Betrieb des Motors (28) der Kopf-Anordnung (16) zu steuern.

3. Batteriebetriebene Fadentrimmer-Anordnung nach Anspruch 2, weiter einschließend ein Schaltelement (56), das mit der Betätigungsvorrichtung (30) und mit dem Motor (28) funktionsfähig verbunden ist, um den Betrieb des Motors zu steuern, wobei die Batteriegehäuse-Anordnung (20) darin das Schaltelement umschließt.

4. Batteriebetriebene Fadentrimmer-Anordnung nach Anspruch 3, weiter einschließend eine Verbindungs-Anordnung (40), die sich zwischen der Handgriff-Anordnung (14) und der Batteriegehäuse-Anordnung (20) erstreckt, wobei die Verbindungs-Anordnung ein Stangenelement (42) einschließt, das die in der Handgriff-Anordnung vorgesehene Betätigungsvorrichtung (30) und das in der Batteriegehäuse-Anordnung vorgesehene variable Schaltelement (56) funktionsfähig verbindet.

5. Batteriebetriebene Fadentrimmer-Anordnung nach Anspruch 4, wobei die Betätigungsvorrichtung (30) ein erstes Auslöseelement (32) einschließt, das mit dem Stangenelement (42) funktionsfähig verbunden ist, wobei, wenn ein Anwender das erste Auslöseelement (32) niederdrückt, ein Abschnitt des ersten Auslöseelements unter Ziehen das Stangenelement dreht, wodurch das Schaltelement (56) eingeschaltet wird, das sich in der Batteriegehäuse-Anordnung (20) befindet.

6. Batteriebetriebener Fadentrimmer nach einem der vorstehenden Ansprüche, wobei sich der Schwerpunkt des batteriebetriebenen Fadentrimmers näherungsweise in der Mitte zwischen dem vorderen Handgriffelement (24) und einem ersten Auslöseelement (32) befindet.

7. Batteriebetriebener Fadentrimmer nach Anspruch 5, wobei die Betätigungsvorrichtungs-Anordnung (30) weiter ein zweites Auslöseelement (34) einschließt.

8. Batteriebetriebener Fadentrimmer nach einem der vorstehenden Ansprüche, wobei die Trägerwellen-Anordnung (12) ein unitäres Element ist, das durch das Haupt-Handgriffelement (26) verläuft.

9. Batteriebetriebene Fadentrimmer-Anordnung nach Anspruch 1, wobei:
die Trägerwellen-Anordnung (12) unitär ist; und
die Batteriebetriebene Fadentrimmer-Anordnung weiter ein Schaltelement (56) umfasst, das in der Batteriegehäuse-Anordnung (20) vorgesehen ist, um den Stromfluss von der Batterie zu dem Motor (28) in der Kopf-Anordnung (16) zu steuern.

10. Batteriebetriebene Fadentrimmer-Anordnung nach Anspruch 9, weiter umfassend eine Verbindungs-Anordnung (40), die sich zwischen der Handgriff-Anordnung (14) und der Batteriegehäuse-Anordnung (20) erstreckt, um das Schaltelement (56) zu steuern, wobei die Verbindungs-Anordnung ein Stangenelement (42) einschließt, das mit einer Betätigungsvorrichtung (30) funktionsfähig verbunden ist, die in der Handgriff-Anordnung vorgesehen ist, und das Schaltelement in der Batteriegehäuse-Anordnungvorgesehen ist.

11. Batteriebetriebene Fadentrimmer-Anordnung nach Anspruch 10, wobei ein Abdeckelement (78), das zwischen der Batteriegehäuse-Anordnung (20) und Haupt-Handgriffelement (26) angeordnet ist, das Stangenelement (42) teilweise umschließt.

12. Batteriebetriebener Fadentrimmer nach Anspruch 9 bis 11, wobei die Stützwelle (12) ein unitäres Element ist, das durch das Haupt-Handgriffelement (26) verläuft.

13. Batteriebetriebener Fadentrimmer nach Anspruch 9 bis 12, wobei die Batteriegehäuse-Anordnung (20) erlaubt, darin mehrere Batterieeinheitsgrößen gegeneinander auszutauschen.

## Revendications

1. Ensemble de tondeuse à fil alimenté par batterie (10), comprenant :
un ensemble d'arbre de support allongé (12) ayant une extrémité proximale et une extrémité distale ;
un ensemble de tête (16) comprenant un moteur (28) connecté à l'extrémité distale de l'ensemble d'arbre de support ;
un ensemble de poignée (14) connecté en service à l'ensemble d'arbre de support, l'ensemble de poignée comprenant un élément de poignée avant (24) et un élément de poignée principal (26) comprenant un boîtier, dans lequel l'élément de poignée avant est disposé devant le centre de gravité sur l'arbre et l'élément de poignée principal est disposé à l'arrière du centre de gravité sur l'arbre ; et
un ensemble de boîtier de batterie (20) connecté à l'extrémité proximale de l'ensemble d'arbre de support et comprenant un boîtier configuré pour recevoir une batterie, **caractérisé en ce que** l'ensemble de boîtier de batterie est espacé de l'élément de poignée principal.

2. Ensemble de tondeuse à fil alimenté par batterie selon la revendication 1, dans lequel le boîtier de l'élément de poignée principal (26) comprend un actionneur (30) configuré pour commander le fonctionnement du moteur (28) de l'ensemble de tête (16).

3. Ensemble de tondeuse à fil alimenté par batterie selon la revendication 2, comprenant en outre un élément de commutation (56) connecté en service à l'actionneur (30) et au moteur (28) pour commander le fonctionnement du moteur, dans lequel l'ensemble de boîtier de batterie (20) enserre l'élément de commutation.

4. Ensemble de tondeuse à fil alimenté par batterie selon la revendication 3, comprenant en outre un ensemble de tringlerie (40) s'étendant entre l'ensemble de poignée (14) et l'ensemble de boîtier de batterie (20), l'ensemble de tringlerie comprenant un élément de tige (42) connectant en service l'actionneur (30) disposé dans l'ensemble de poignée et l'élément de commutation variable (56) disposé dans l'ensemble de boîtier de batterie.

5. Ensemble de tondeuse à fil alimenté par batterie selon la revendication 4, dans lequel l'actionneur (30) comprend un premier élément de détente (32) connecté en service à l'élément de tige (42), dans lequel, lorsqu'un utilisateur presse le premier élément de détente, une partie du premier élément de détente tourne en tirant l'élément de tige, activant de la sorte l'élément de commutation (56) situé dans le boîtier de batterie (20).

6. Ensemble de tondeuse à fil alimenté par batterie selon l'une quelconque des revendications précédentes, dans lequel le centre de gravité de la tondeuse à fil alimentée par batterie est situé approximativement au centre entre l'élément de poignée avant (24) et un premier élément de détente (32).

7. Ensemble de tondeuse à fil alimenté par batterie selon la revendication 5, dans lequel l'ensemble actionneur (30) comprend en outre un second élément de détente (34).

8. Ensemble de tondeuse à fil alimenté par batterie selon l'une quelconque des revendications précédentes, dans lequel l'arbre de support (12) est un élément unitaire qui passe à travers l'élément de poignée principal (26).

9. Ensemble de tondeuse à fil alimenté par batterie selon la revendication 1, dans lequel :
l'ensemble d'arbre de support (12) est unitaire ; et
l'ensemble de tondeuse à fil alimenté par batterie comprend en outre un élément de commutation (56) disposé dans l'ensemble de boîtier de batterie (20) pour commander l'écoulement de courant de la batterie au moteur (28) dans l'ensemble de tête (16).

10. Ensemble de tondeuse à fil alimenté par batterie selon la revendication 9, comprenant en outre un ensemble de tringlerie (40) qui s'étend entre l'ensemble de poignée (14) et l'ensemble de boîtier de batterie (20) pour commander l'élément de commutation (56), l'ensemble de tringlerie comprend un élément de tige (42) raccordé en service à un actionneur (30) disposé dans l'ensemble de poignée et l'élément de commutation disposé dans l'ensemble de boîtier de batterie.

11. Ensemble de tondeuse à fil alimenté par batterie selon la revendication 10, dans lequel un élément couvrant (78) positionné entre l'ensemble de boîtier de batterie (20) et l'élément de poignée principal (26) enserre en partie l'élément de tige (42).

12. Tondeuse à fil alimentée par batterie selon les revendications 9 à 11, dans laquelle l'arbre de support (12) est un élément unitaire qui passe à travers l'élément de poignée principal (26).

13. Tondeuse à fil alimentée par batterie selon les revendications 9 à 12, dans laquelle l'ensemble de boîtier de batterie (20) permet d'échanger de multiples tailles d'unité de batterie.
